# EUROPEAN PATENT APPLICATION

(11) **EP 1 613 105 A1**
(43) Date of publication of application: **04.01.2006**
(21) Application number: 04291646.0
(22) Date of filing: 29.06.2004
(51) Int. Cl.: H04Q 7/28

(54) **Transmission of content in a push-to-talk system**

(71) Applicant: FRANCE TELECOM, 75015 Paris (FR)
(72) Inventor: Crawford, Ryan, Middlesex UB3 2AZ (GB)
(74) Representative: DeVile, Jonathan Mark

(57) **Abstract**

A system provides a push-to-talk communications facility to a group of user equipment via an access network, the system comprising a push-to-talk server and an applications server. The push-to-talk server includes a controller component and a media mixer component. The controller component is operable to receive and to send control messages to and from the user equipment to establish a push-to-talk communications channel for one member of the group of user equipment to communicate a push-to-talk message to the other members of the group. The media mixer component is operable to receive the push-to-talk message from the one member of the group and to communicate the push-to-talk message to the other members of the group of user equipment via the push-to-talk communications channel. The application server is operable to provide data representing content for communication to the group of user equipment. The push-to-talk server includes a data interface for receiving the content data from the applications server and a control message generator, which is operable in combination with the controller component to generate control messages. The control messages establish a push-to-talk communications channel for communicating the content data from the data interface to the group of user equipment. The push-to-talk server is thereby arranged to push content data from the application server to the group of user equipment in addition to the push-to-talk communications which is being conducted between members of the group. As such information of general interest or which is associated with a particular task being performed by the group is automatically communicated to members of the group. In some embodiments the push-to-talk server may include a text-speech engine which is operable to convert the content data into audio signals so that the content data may be communicated as a push-to-talk communication to each member of the group.

## Description

### Field of the Invention

The present invention relates to systems for providing push-to-talk communications via access networks and to push-to-talk servers operable to provide push-to-talk communications. The present inventions also related to methods for providing push-to-talk communications to groups of user equipment via access networks.

### Background of the Invention

Push-to-talk is a well known facility for exchanging spoken messages between a group of users via a common communications channel. Typically a radio communications transceiver equipment is provided to each member of the group. Each transceiver equipment is arranged to transmit and receive radio signals on a common radio communications channel. The transceiver equipment is arranged in a default state to receiver radio signals from the channel. The transceiver equipment is provided with a "talk" button which, when pushed changes the mode of operation of the transceiver to transmit on the common radio channel. A user wishing to talk to other members of the group, activates the talk button and speaks into the transceiver equipment. The user is therefore considered or referred to as "having the floor". In accordance with well established techniques the speech is converted into radio signals and communicated to the other members of the group. The common radio channel used by the transceiver equipment therefore forms a half duplex communications channel.

Push-to-talk over cellular (PoC) is an emerging technical standard which aims to provide a push-to-talk communications facility using a mobile radio access network such as for example the Global System for Mobiles (GSM) or the Universal Mobile Telecommunications System (UMTS). Although mobile radio access networks such as GSM and UMTS have been developed to support person-to-person communications via dedicated virtual communications channels, the PoC system is arranged to allow a group of user equipment to share a common virtual communications channel so that a push-to-talk service can be provided. The PoC system provides a push-to-talk communications facility to a group of user equipment via an access network formed from the mobile radio communications network. The system comprises a push-to-talk server which includes a controller component operable to receive and to send session-initiation protocol control messages to and from the user equipment to establish push-to-talk communications channels between members of the group. The push-to-talk server also includes a media mixer component operable to communicate data providing the spoken message to the group of user equipment to effect a push-to-talk communication. In one implementation, the PoC utilises the Internet Protocol Multimedia Sub-system [1] in order to set up and tear down communications sessions between Internet Protocol enabled user equipment to establish a push-to-talk communications channel for communicating the spoken message.

### Summary of Invention

According to the present invention a system provides a push-to-talk communications facility to a group of user equipment via an access network, the system comprising a push-to-talk server and an applications server. The push-to-talk server includes a controller component and a media mixer component. The controller component is operable to receive and to send control messages to and from the user equipment to establish a push-to-talk communications channel for one member of the group of user equipment to communicate a push-to-talk message to the other members of the group. The media mixer component is operable to receive the push-to-talk message from the one member of the group and to communicate the push-to-talk message to the other members of the group of user equipment via the push-to-talk communications channel. The application server is operable to provide data representing content for communication to the group of user equipment. The push-to-talk server also includes a data interface for receiving the content data from the applications server and a control message generator, which is operable in combination with the controller component to generate control messages. The control messages establish a push-to-talk communications channel for communicating the content data from the data interface to the group of user equipment.

Push-to-talk servers according to embodiments of the invention are arranged to push content data from an application server to a group of user equipment providing an enhancement to push-to-talk communications. As such information of general interest or which is associated with a particular task being performed by the group is automatically communicated to members of the group. The type of information content may be selected in accordance with an application of the push-to-talk system. For example, the emergency services such as the police or the fire brigade may use the push-to-talk communications facility provided by the server, in which case the content data communicated to the group may be a list of names of suspected criminals which are wanted by the police, or a reminder to use a particular item of equipment in a certain way for the fire brigade. For a general application, the content data may provide, for example, weather information to the group of users.

Whilst the content data may be in different forms such as video or text information, in some embodiments the push-to-talk server may include a text-to-speech engine which is operable to convert the content data into audio signals so that the content data may be communicated as an audible message to each member of the group. The content data is therefore distributed as if the content data were a push-to-talk communication.

Whilst the application server may be arranged to send the content data to the push-to-talk server for communication to the group of user equipment without discrimination, in some embodiments the application server may communicate control data identifying characteristics for delivering the content data. The data interface communicates the control data, received from the application server, to the control message generator, the control message generator generating, in combination with the controller component, messages for establishing the push-to-talk communications channel in accordance with the control data. The characteristics for delivering the content data may include, for example, an identifier of the group of the user equipment which is to receive the content data.

Various further aspects and features of the present invention are defined in the appended claims and include a push-to-talk server.

### Brief Description of the Drawings

Embodiments of the present invention will now be described by way of example only with reference to the accompanying drawings, where like parts are provided with corresponding reference numerals, and in which:
Figure 1 is a schematic representation of a push-to-talk over cellular (PoC) system;
Figure 2 is a schematic block diagram of parts of the PoC system shown in Figure 1 which provide the push-to-talk communications facility via an access network formed from a cellular mobile telecommunications network;
Figure 3 is a schematic block diagram illustrating a group of user equipment using the PoC system shown in Figures 1 and 2;
Figure 4 provides a flow diagram illustrating the operation of the PoC system shown in Figures 1 and 2;
Figure 5 is a schematic block diagram illustrating the group of user equipment receiving content from an application server according to the present technique;
Figure 6 is a schematic block diagram of a PoC system embodying the present technique; and
Figure 7 is a schematic block diagram and part flow diagram illustrating a process in which content data is communicated to the group of user equipment by the PoC server shown in Figure 6.

### Description of Example Embodiments

### PoC System

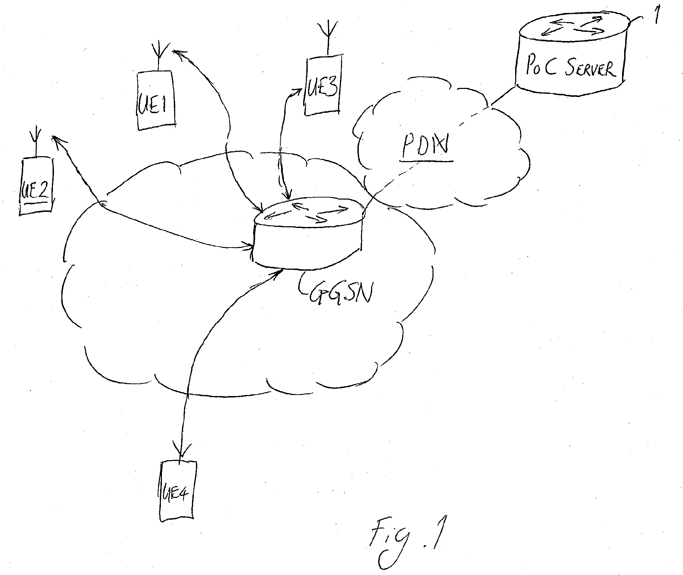

Figure 1 provides an illustration of a PoC system in which a push-to-talk service is provided to a group of user equipment UE1, UE2, UE3, UE4 via an access network AN. The access network may include a mobile radio telecommunications network operating in accordance with the GSM or UMTS standards for example. In one example the access network AN is arranged to support the General Packet Radio System (GPRS). The access network may therefore support data communications in accordance with an Internet Protocol (IP).

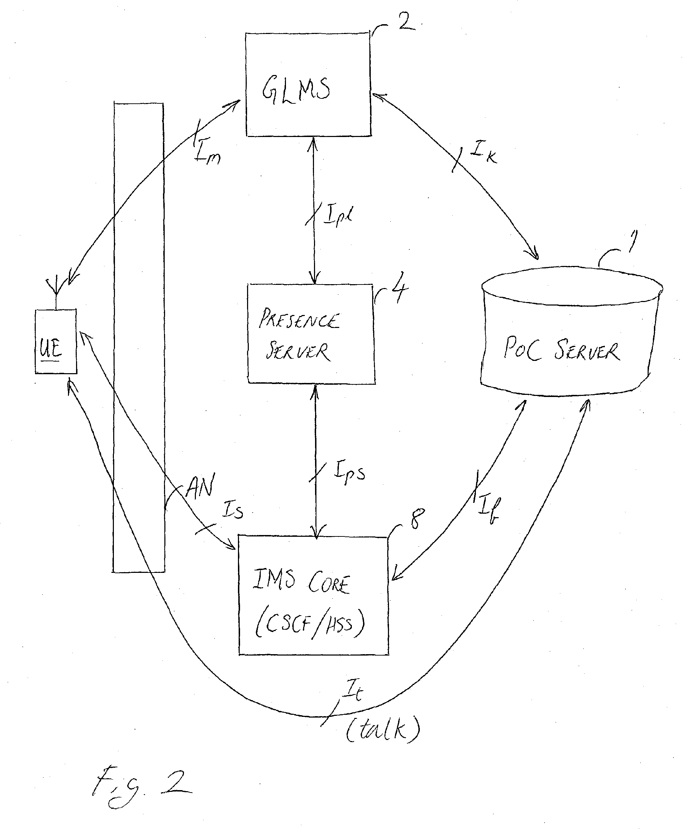

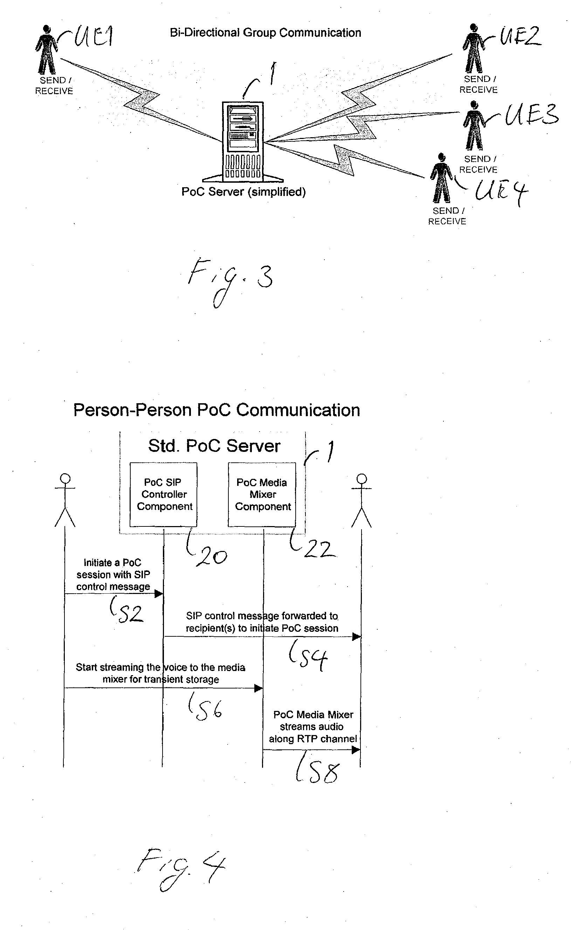

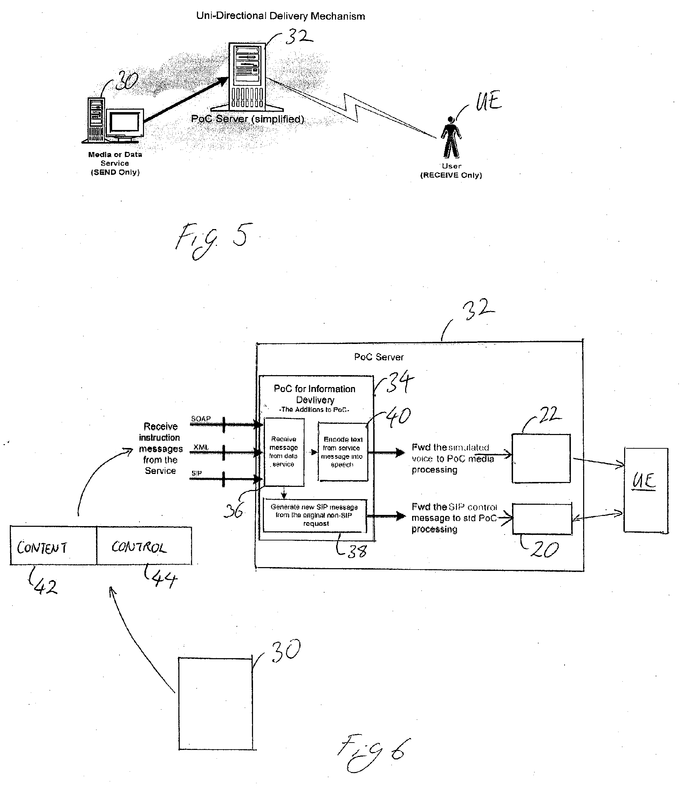

As illustrated in Figure 1, the group of user equipment is communicating using the access network AN via a Gateway GPRS Support Node (GGSN). In accordance with the GPRS standard, the GGSN forms an interface between external packet data networks PDN and the GPRS access network AN for communicating with the user equipment UE1, UE2, UE3, UE4. The proposed standard for push-to-talk over cellular (PoC) is be based on the Internet Protocol Multimedia Sub-system (IMS) as specified in [1], with some exceptions where only IPv4 is supported, or where an IMS-enabled PoC service is offered through mobile networks different from that specified in 3GPP release 5. However, according to the proposed standard, as shown in Figure 1, there is provided a PoC server 1, which is operable to establish push-to-talk communications channels between the group of user equipment UE1, UE2, UE3, UE4. In order to establish the communications channel for communicating a push-to-talk message, the PoC server 1 sends and receives Session Initiation Protocol (SIP) messages via the IMS as illustrated in Figures 2 and 3.

Figure 2 provides a schematic block diagram of parts which form the PoC system using the access network AN, in combination with parts of an IMS core network. The PoC system includes a Group and List Management Server (GLMS) 2 and a Presence Server 4. According to the PoC specification [2], the GLMS 2 is provided to manage groups, contact lists and access lists. A contact list is an address book which may be used by PoC users to establish an instant talk session with other PoC users or PoC groups. A user may have one or several contact lists including identities of other PoC users or PoC groups. The GLMS server 2 provides a facility for contact list management including operations to allow a user equipment UE to store and retrieve contact lists located in the GLMS server 2. The presence server 4 is arranged to manage presence information and is responsible for combining the presence-related information for a user equipment from information received from several sources.

As will be explained in more detail shortly, the PoC server 1 is operable to provide the PoC service by utilising the access network AN. The PoC server 1 performs the task of setting up a PoC communications channel for one of the user equipment to communicate a message to the other users within the group. The PoC channel is established using SIP messages, which are sent to and received from the Internet Protocol Multimedia Sub-system (IMS) 8. The PoC channel is established for communicating a message from a user equipment which "has the floor" to the other user equipment in the group UE. Effectively, a user equipment has the floor when a push-to-talk facility is activated on the user equipment and the user speaks a message for communication to the other users in the group. There are various interfaces Iₖ, Iₜ, Iₚ₁, Iₚₛ, Iₘ, Iₛ, I_{f} between the parts of the PoC system which are specified by the PoC standard [2]. An explanation of these interfaces can be found in [2] and will not be detailed herein.

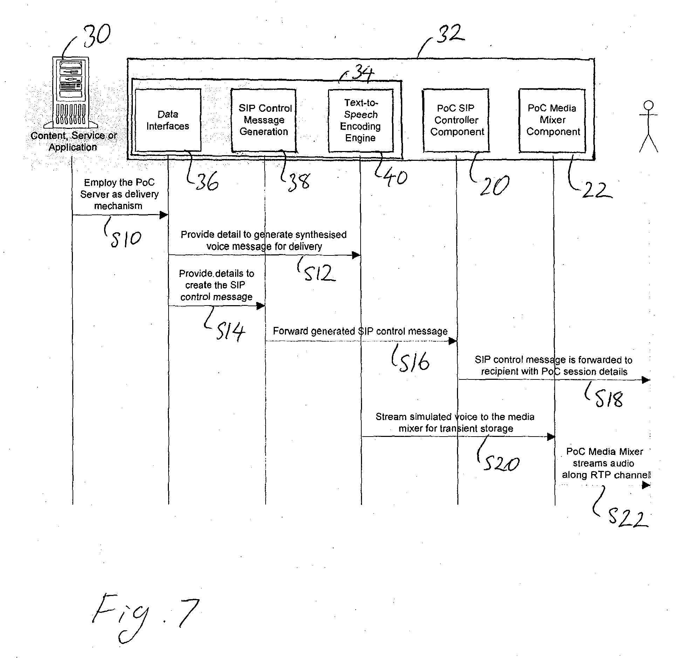

A conventional operation of a PoC server to establish a PoC communication is illustrated in Figures 3 and 4. Other parts of the PoC system shown in Figure 2 are not shown in Figures 3 and 4 for simplicity. In Figure 3, a user operates the user equipment UE1 by operating a push-to-talk button on the user equipment and speaks a message into the user equipment UE1 for communication to the other user equipment in the group UE2, UE3, UE4. Figure 4 provides a more detailed diagram of the PoC server 1, with a flow diagram illustrating the steps which are performed in establishing a PoC channel for communicating the PoC message from the first user equipment UE1 to the other members of the group UE2, UE3, UE4. As shown in Figure 4, the PoC server 1 includes a SIP controller component 20 and a media mixer component 22. The SIP controller component 20 is operable to receive and to send SIP control messages to and from the user equipment of the group which are interpreted by the IMS core 8 to establish a PoC communications channel between the first user equipment UE1 and the other members of the group UE2, UE3, UE4. The media mixer component 22 is operable to receive the audio signals providing the message from the first user equipment UE1, and after the PoC communication channel has been established, to communicate data representing the audio signals to the group of user equipment UE2, UE3, UE4. The audio signals are stored in the media mixer component 22 and communicated to the other members of the group using the Real-time Transport Protocol (RTP). The process steps illustrating the example PoC communication from the first user equipment UE1 to the group of the user equipment shown in Figure 4 are summarised as follows:
S2: The user of the first user equipment UE1 activates the push-to-talk button on the first user equipment UE1 (to obtain the floor) in order to send a message to the other users of the group. In response the first user equipment UE1 sends SIP control messages to the PoC server 1 via the IMS core to request a PoC communication channel.
S4: The SIP control message for requesting a PoC communication is forwarded from the controller component 20 to the other user equipment UE2, UE3, UE4 to initiate a PoC communication session.
S6: The user of the first user equipment UE1 then begins to speak. Audio signals representative of the speech are generated and streamed to the media mixer component 22 of the PoC server 1 for transient storage pending communication to the other members of the group using the RTP. The SIP control messages communicated in step S4 also provide a Session Description Protocol (SDP) message which details the IP address of the media mixer and the port address of a PoC session communications channel and the type of media (in this case audio). This provides the where and what to be retrieved from the media mixer component to the equipment.
S8: The PoC media mixer component then streams the audio signals providing the message to the other user equipment UE2, UE3, UE4 of the group using the RTP. The data representing the audio signals providing the spoken message from the first user equipment UE1 is identified by the received URI and fetched from the media mixer component. The user equipment of the group UE2, UE3, UE4 are then arranged to reproduce the spoken message for the users.

### Adapted PoC System

An example of a PoC system according to the present technique is illustrated in Figure 5, 6 and 7. As illustrated by a schematic block diagram shown in Figure 5, the present technique provides an applications server 30 which is operable to provide content information for distribution to a group of user equipment using an adapted PoC server 32 providing a push-to-talk communications service to the group. The PoC server 32 may operate as illustrated in the example described above with reference to Figures 1 to 4 to provide the push-to-talk communications service. Figure 6 provides a schematic block diagram of the PoC system according to the present technique in which a more detailed illustration of one example implementation of the push-to-talk server 32 is provided. As illustrated in Figure 6, the PoC server 32 includes an information delivery component 34 according to the present technique, which includes a data interface 36, a control message generator 38 and a text-to-speech encoder 40.

As illustrated in Figure 6 the application server 30 communicates the content data 42 in a convenient form to the data interface 36 of the PoC server 32. The content data may also include control data 44 which specifies characteristics for delivering the content data. The characteristics may identify, for example, the group of user equipment to which the content data is to be delivered.

The PoC server 32 is arranged to push the content data 42 to the group of user equipment in accordance with the PoC system described in Figure 1 to 4. As such the control message generator 38 is arranged to simulate actions which would be performed by a user equipment to communicate a push-to-talk message to the other user equipment in a conventional operation. To this end, the control message generator 38 operates in combination with the SIP controller component 20 described above to generate SIP control messages for pushing the content data received via the data interface 36 to the group of user equipment UE1, UE2, UE4, UE4. According to the example of Figure 6, the data interface 36 receives the content data 42 and control data 44 and passes the content data 42 to a text-to-speech converter 40. The data interface 36 sends the control data 44 to the control message generator 38, which is operable to generate SIP control messages for establishing a PoC communications channel for communicating the content data to the group of user equipment. As for the previous example the SIP controller component 20 generates and communicates SIP messages for communication to the user equipment via an IMS network. However, according to the present technique the PoC communications channel is established for communicating the content data 42 from the PoC server 32 to every member of the group of user equipment UE1, UE2, UE3, UE4. The content data 42 may be communicated in any convenient form, such as a multimedia communication. According to the example illustrated in Figures 5, 6 and 7, the content data 42 is converted into audio signals by the text-to-speech encoding generator 40 and forwarded to the media mixer component 22 and stored for distribution to the group of user equipment.

According to one example, the control message generator 38 is operable to generate SIP messages in accordance with the control data 44 provided by the application server 30 with the content data 42. The SIP control messages are then communicated to the SIP controller component 20 of the PoC server 32 for communication to the user equipment UE as for the example illustrated with reference to Figure 4. Effectively, the control message generator 38 in combination with the SIP controller component 22 is operable to generate and communicate the SIP messages to the user equipment via the IMS core 8, to establish the PoC communications channel. The user equipment UE is provided with an SDP message identifying the media and the location of the audio representation of the content data generated by the text-to-speech engine 40. Each of the user equipment in the PoC group then proceeds to fetch the data representative of the audio signals identified by a URI for reproduction to each associated user in accordance with the RTP.

The present technique provides a facility for a PoC system to distribute content data automatically to a PoC group of user equipment, using for example a standardised PoC system. The content data may be application specific or may be general information such as a weather report. An example of specific information might be traffic reports, which are automatically distributed to a group of taxi drivers. As mentioned above other examples might the distribution of instructions automatically to fire fighters or a list of missing persons to the police force.

The content data according to the present technique is generated by an application server 30 and communicated to the PoC server 32 by any convenient form. In one example the content data is communicated in accordance with HTTP via the Internet. The data interface 34 may include a web service, a servlet, or a socket connection so that the content data may be received in any convenient format, such as for example XML, HTTP, Simple Object Access Protocol (SOAP) or SIP requests. The content data may therefore be provided from any application server or service platform.

Figure 7 provides a message flow diagram illustrating the operation of the PoC system in accordance with the present technique to push content data to the group of user equipment UE1, UE2, UE3, UE4. The steps involved in delivering content data to the group of user equipment are summarised as follows:
S10: The applications server 30 generates content data according to a particular application. The content data may be selected in accordance with a use to which the PoC system is being applied and/or a particular profile of the users in the PoC group. The application server communicates the content data to the data interface 34 of the PoC server 32. The content data may also include control data indicating characteristics for the delivery of the information to the group of users.
S12: The data interface 36 receives the content data in accordance with a preferred delivery technique (e.g. HTTP) and prepares the content data for delivery to the group of user equipment. For example, the content data may be delivered to each of the user equipment in the group as an audio message, although it will be appreciated that other media types are possible. For this example the content data is delivered to a text-to speech encoding engine 40.
S14: The data interface 36 also sends control signals to the SIP control message generator 38 to instruct the SIP control message generator 38 to communicate the content data to the group of user equipment.
S16: The SIP control message generator 38 responds to the control signals received from the data interface by generating SIP messages for establishing the PoC communication channel for delivering the content data, as if the server were a user equipment wishing to send a push-to-talk message.
S18: The SIP controller component 20 of the PoC server 32 then communicates SIP messages in accordance with a conventional operation described above to the user equipment in the group. The SIP messages are arranged to establish a PoC communication channel for communicating the content data to the group.
S20: The text-to-speech encoding engine 40 converts the content data into data representative of audio signals in the form of speech. The audio signal data is communicated to the media mixer component 22 of the PoC server 32 and stored on the server pending communication to each member of the group of user equipment. The audio signal data is therefore streamed to the media mixer and stored.
S22: The User Equipment are provided via the SIP messages with the location of the audio signals to be retrieved from the PoC media mixer. The audio signals are then streamed from the PoC media mixer in accordance with RTP via the established PoC communications channel to each member of the group of user equipment.

Various modifications may be made to the embodiments described above without departing from the scope of the present invention. For example although the embodiments described above are arranged to deliver the content data in the form of audio signals, it will be understood that the content data may be delivered to a push-to-talk group of user equipment using an alternative media type such as video. Various further aspects and features of the present invention are defined in the appended claims.

### References

[1] 3GPP TS 23.228 and TS 24.229
[2] Architecture V1.1.0 (2003-08) *Technical Specification* **Push-to-talk over Cellular (PoC) Architecture PoC Release 1.0** Ericsson, Motorola, Siemens, Nokia.

## Claims

1. A system for providing a push-to-talk facility to a group of user equipment via an access network, the system comprising
a push-to-talk server including a controller component for receiving and sending control messages to and from the user equipment to establish a push-to-talk communications channel for one member of the group of user equipment to communicate a push-to-talk message to the other members of the group, and a media mixer component for receiving the push-to-talk message from the one member of the group of user equipment and for communicating the push-to-talk message to the other members of the group of user equipment via the push-to-talk communications channel,
an application server operable to provide data representing content for communication to the group of user equipment, wherein
the push-to-talk server includes a data interface for receiving the content data from the applications server and a control message generator which is operable in combination with the controller component to generate control messages to establish a push-to-talk communications channel for communicating the content data from the data interface to the group of user equipment.

2. A system as claimed in Claim 1, wherein the push-to-talk server includes a text-to-speech encoding engine operable to convert the content data into audio signals and the media mixer component is operable to communicate the audio signals representing the content data in accordance with a push-to-talk communication to the group of user equipment, via the push-to-talk communications channel.

3. A system as claimed in Claim 1, 2 or 3, wherein the applications server is operable to generate control data with the content data identifying characteristics for delivering the content data, and the data interface is operable to receive the control data and to communicate the control data to the control message generator, the control message generator generating in combination with the controller component messages for establishing the push-to-talk communications channel in accordance with the control data.

4. A system as claimed in Claim 3, wherein the characteristics for the delivery of the content data include an identifier for identifying the group of the user equipment to receive the content data.

5. A system as claimed in any of Claims 1 to 4, wherein the control messages generated by the controller component for establishing the push-to-talk communications channel include session-initiation protocol control messages.

6. A push-to-talk server comprising
a controller component for receiving and for sending control messages to and from a group of user equipment to establish a push-to-talk communications channel for one member of the group of user equipment to communicate a push-to-talk message to the other members of the group,
a media mixer component for receiving the push-to-talk message from the one member of the group of user equipment and for communicating the push-to-talk message to the other members of the group of user equipment via the push-to-talk communications channel,
a data interface for receiving content data from an applications server, and
a control message generator which is operable in combination with the controller component to generate control messages to establish a push-to-talk communications channel for communicating the content data from the data interface to the group of user equipment.

7. A push-to-talk server as claimed in Claim 6, including a text-to-speech encoding engine operable to convert the content data to audio signals and the media mixer component is operable to communicate the audio signals representing the content data in accordance with a push-to-talk communication to the group of user equipment, via the push-to-talk communications channel.

8. A push-to-talk server as claimed in Claim 6, 7 or 8, wherein the data interface is operable to receive control data with the content data from the applications server identifying characteristics for delivering the content data, and to communicate the control data to the control message generator, the control message generator generating in combination with the controller component messages for establishing the push-to-talk communications channel in accordance with the control data.

9. A push-to-talk server as claimed in Claim 8, wherein the characteristics for the delivery of the content data include an identifier for identifying the group of the user equipment to receive the content data.

10. A push-to-talk server as claimed in any of Claims 6 to 9, wherein the control messages generated by the controller component for establishing a push-to-talk communications channel include session-initiation protocol control messages.

11. A method for providing a push-to-talk communications to a group of user equipment via an access network, the method comprising
receiving and sending control messages to and from the user equipment to establish a push-to-talk communications channel for one member of the group of user equipment to communicate a push-to-talk message to the other members of the group,
receiving the push-to-talk message from the one member of the group of user equipment at a push-to-talk server,
communicating the push-to-talk message from the push-to-talk server to the other members of the group of user equipment via the push-to-talk communications channel,
providing data representing content for communication to the group of user equipment, wherein the receiving and communicating the control messages includes
generating control messages to establish a push-to-talk communications channel for communicating the content data to the group of user equipment, and
communicating the content data via the established push-to-talk communications channel.

12. A method as claimed in Claim 11, comprising
converting the content data into audio signals,
storing the audio signals at the push-to-talk server, and
communicating the audio signals representing the content data in accordance with a push-to-talk communication to the group of user equipment, via the push-to-talk communications channel.

13. A method as claimed in Claim 11 or 12, comprising
generating control data with the content data identifying characteristics for delivering the content data, wherein the generating the control messages includes
generating control messages for establishing the push-to-talk communications channel in accordance with the control data.

14. A computer program providing information signals which when loaded onto a data processor causes the data processor to perform the method according to any of Claims 11, 12 or 13.

15. A medium bearing signals representative of the computer program as claimed in Claim 14.
